# EUROPEAN PATENT APPLICATION

(11) **EP 1 930 238 A1**
(43) Date of publication of application: **11.06.2008**
(21) Application number: 07122189.9
(22) Date of filing: 03.12.2007
(51) Int. Cl.: B64D 13/02, F16K 1/22, F16K 17/02, F16K 31/08

(54) **Check valve with adjustable opening pressure**

(30) Priority: 05.12.2006 US 633766
(71) Applicant: Honeywell International, Inc., Morristown, NJ 07962 (US)
(72) Inventor: McGonigle, G. Stephen, Gilbert, AZ 85297 (US); Denike, Stuart K., Phoenix, AZ 85048 (US); Atkins, Don J., Chandler, AZ 85224 (US); Jira, Joseph J., Laveen, AZ 85339 (US); Sleeper, Robert D., Laveen, AZ 85339 (US)
(74) Representative: Buckley, Guy Julian

(57) **Abstract**

A pressure relief check valve (110) includes a valve body (202), a flapper (204), a magnet (206) coupled to the flapper (204), and an adjustment mechanism (207). The valve body (202) has an upstream side 208, a downstream side (210), and a flow channel (212) that extends therebetween. The flapper (204) is rotationally mounted on the valve body (202), and is movable between a closed position, in which the flapper (204) at least substantially seals the flow channel (212), and an open position, in which the flapper (204) unseals the flow channel (212). The adjustment mechanism (207) comprises a magnetically permeable material, and is movably coupled to the valve body (202) at a position in which the adjustment mechanism (207) is magnetically attracted to the magnet (206) with a magnetic closing force at least when the flapper (204) is in the closed position, to thereby at least substantially inhibit flapper (204) movement from the closed position. Movement of the adjustment mechanism (207) varies the magnetic closing force.

## Description

### TECHNICAL FIELD

The present invention relates generally to a pressure relief check valve and, more particularly, to a pressure relief check valve with an adjustable opening pressure.

### BACKGROUND

Pressure relief check valves are used in myriad systems and, as is generally known, are used to selectively relieve fluid pressure in a system or component of a system, if the fluid pressure therein attains a predetermined pressure value. One particular system that may include one or more pressure relief check valves is an aircraft environmental control system (ECS). Aircraft ECSs typically include relatively low-pressure distribution ducts and, as such, may additionally include high-flow pressure relief and reverse flow pressure protection devices.

In order to provide the desired relief and reverse flow protection functionalities, some ECSs include a pneumatic relief check valve using a poppet, a spring, and/or other moving parts. These valves, while generally safe, reliable, and robust, may experience pressure loss, may be larger or heavier than is optimal in certain situations, and/or may have moving parts that experience wear and/or exhibit less than perfect precision after repeated use.

Accordingly, there is a need for a device that provides adequate pressure relief and reverse flow protection that reduces pressure loss and/or wear, increases precision and/or durability, is smaller in size and/or weight, and/or uses fewer moving parts, as compared to presently known devices. The present invention addresses one or more of these needs.

### BRIEF SUMMARY

The present invention provides an adjustable pressure relief check valve.

In one embodiment, and by way of example only, the adjustable pressure relief check valve comprises a valve body, a flapper, a magnet, and an adjustment mechanism. The valve body has an upstream side, a downstream side, and a flow channel that extends between the upstream and downstream sides. The flapper is rotationally mounted on the valve body, and is movable between a closed position, in which the flapper at least substantially seals the flow channel, and an open position, in which the flapper unseals the flow channel. The magnet is coupled to the flapper. The adjustment mechanism comprises a magnetically permeable material, and is movably coupled to the valve body at a position in which the adjustment mechanism is magnetically attracted to the magnet with a magnetic closing force at least when the flapper is in the closed position, to thereby at least substantially inhibit flapper movement from the closed position. Movement of the adjustment mechanism varies the magnetic closing force.

In another embodiment, and by way of example only, the adjustable pressure relief check valve comprises a valve, a flapper, and an adjustable magnet. The valve body has an upstream side, a downstream side, and a flow channel that extends between the upstream and downstream sides. The flapper is rotationally mounted on the valve body, and is movable between a closed position, in which the flapper at least substantially seals the flow channel, and an open position, in which the flapper at least substantially unseals the flow channel. The flapper comprises a magnetically permeable material. The adjustable magnet is movably coupled to the valve body at a position in which the adjustable magnet magnetically attracts the magnetically permeable material with a magnetic closing force at least when the flapper is in the closed position, to thereby at least substantially inhibit flapper movement from the closed position.

In yet another embodiment, and by way of example only, the adjustable pressure relief check valve comprises a valve body, a flapper, and an adjustment mechanism. The valve body has an upstream side, a downstream side, and a flow channel that extends between the upstream and downstream sides. The flapper is rotationally mounted on the valve body, and is movable between a closed position, in which the flapper at least substantially seals the flow channel, and an open position, in which the flapper unseals the flow channel. The flapper includes a magnet. The adjustment mechanism comprises a magnetically permeable material, and is movably coupled to the valve body at a position in which the adjustment mechanism is magnetically attracted to the magnet with a magnetic closing force at least when the flapper is in the closed position, to thereby at least substantially inhibit flapper movement from the closed position. The movement of the adjustment mechanism varies the magnetic closing force.

Other independent features and advantages of the preferred systems will become apparent from the following detailed description, taken in conjunction with the accompanying drawings which illustrate, by way of example, the principles of the invention.

### BRIEF DESCRIPTION OF THE DRAWINGS

FIG. 1 is a simplified schematic diagram illustrating a portion of an aircraft environmental control system including a pressure relief check valve;

FIG. 2 is a plan view of a first embodiment of a pressure relief check valve that can be used in the system of FIG. 1, shown from a downstream side, in an open position;

FIG. 3 is a plan view of the first embodiment of a pressure relief check valve of FIG. 2, shown from a downstream side, in a closed position;

FIG. 4 is a cross section view of the pressure relief check valve of FIG. 2, shown for illustrative purposes with one flapper in an open position and another flapper in a closed position;

FIG. 5 is a close-up cross section view of a portion of the pressure relief check valve of FIG. 2, shown in a closed position;

FIG. 6 is a close-up cross section view similar to that shown in Fig. 5, but shown in a partially open position; and

FIG. 7 is a plan view of a second embodiment of a pressure relief check valve that can be used in the system of FIG. 1, shown from a downstream side, in an open position.

### DETAILED DESCRIPTION OF A PREFERRED EMBODIMENT

The following detailed description of the invention is merely exemplary in nature and is not intended to limit the invention or the application and uses of the invention. Furthermore, there is no intention to be bound by any theory presented in the preceding background or the following detailed description. In this regard, although the invention is described herein as being implemented in an air distribution system, it will be appreciated that it could also be implemented in any one of numerous other types of systems that direct the flow of various types of fluid, both within or apart from an aircraft, and/or any one of numerous other types of vehicles or other types of apparatus or systems.

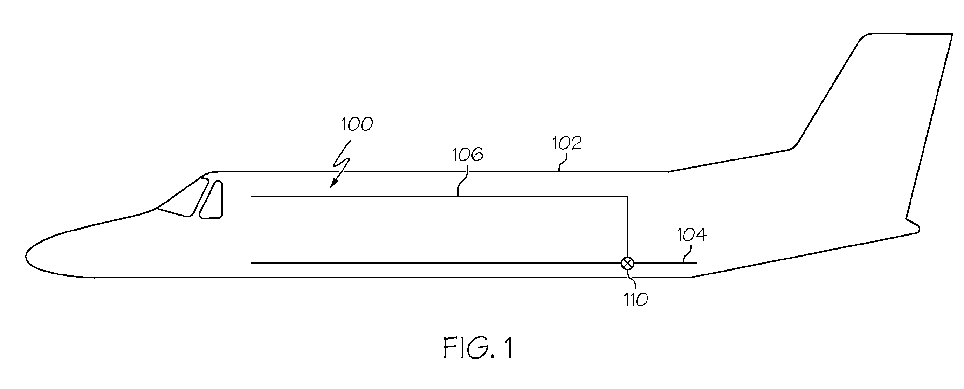

FIG. 1 depicts a simplified schematic diagram illustrating an air distribution system 100 disposed within an aircraft 102. The air distribution system 100 includes an inlet duct 104, one or more outlet ducts 106 (only one of which is shown in FIG. 1), and a pressure relief check valve 110 positioned in the duct 106. The inlet duct 104 receives air from an air source, such as, for example, engine bleed air, and the outlet duct 106 exhausts air into desired sections of the aircraft 102. In one exemplary embodiment, the outlet duct 106 exhausts air into or out of an aircraft cabin (not shown).

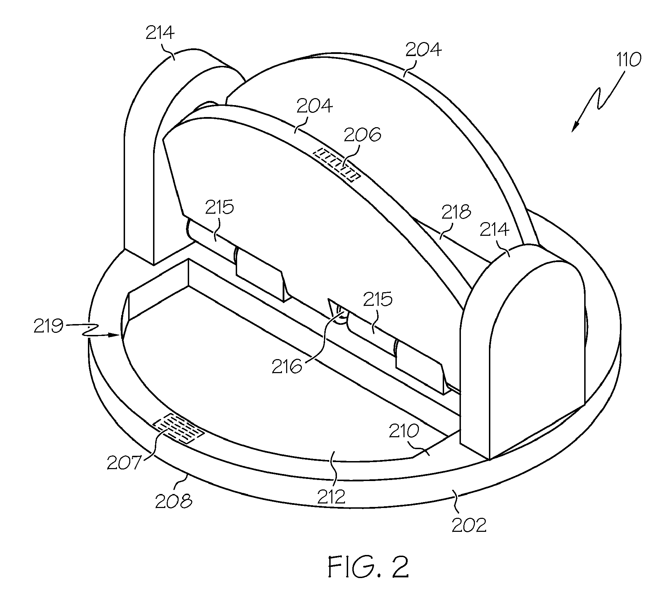

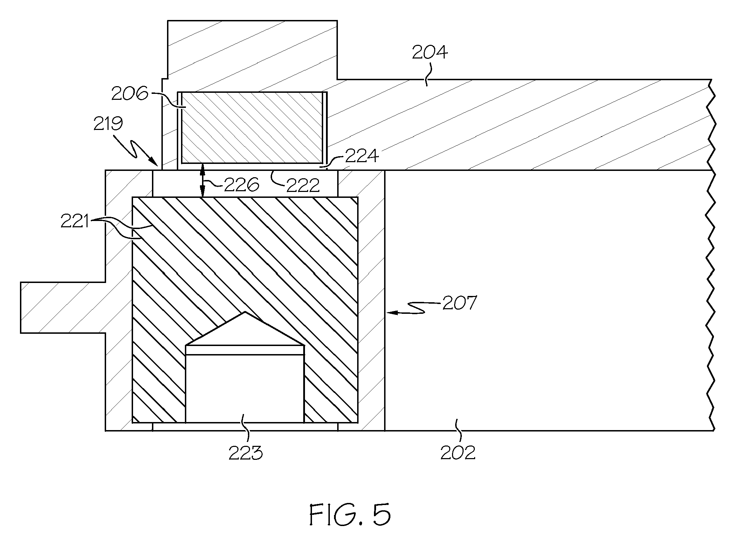

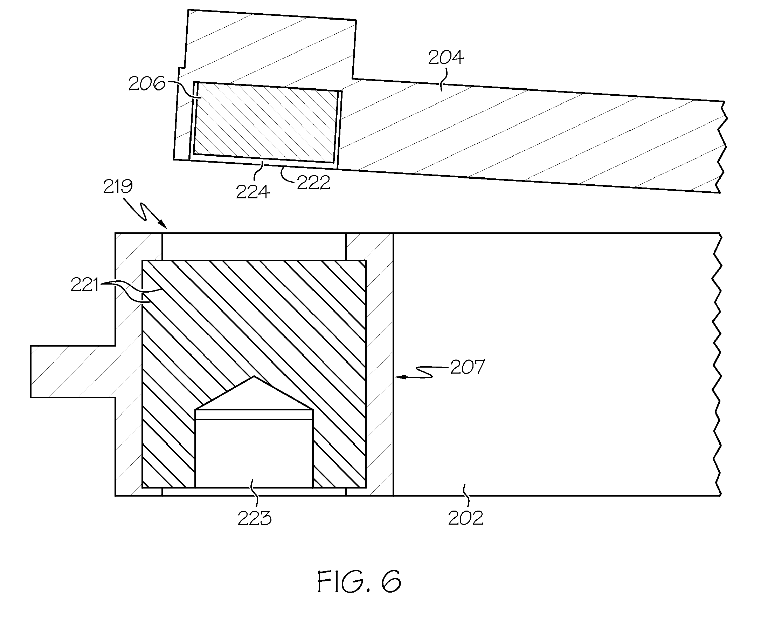

The pressure relief check valve 110 is configured to control the air flow through the outlet duct 106, to release pressure in the air distribution system if it exceeds a predetermined amount, and to prevent the air from flowing in a reverse direction. The pressure relief check valve 110 is preferably configured to exhibit a minimal pressure drop. In a particular preferred embodiment, the pressure relief check valve 110 is implemented using a check valve. A first exemplary embodiment of the pressure relief check valve 110 is depicted with various views in FIGs. 2-6, and in connection therewith will now be described in greater detail.

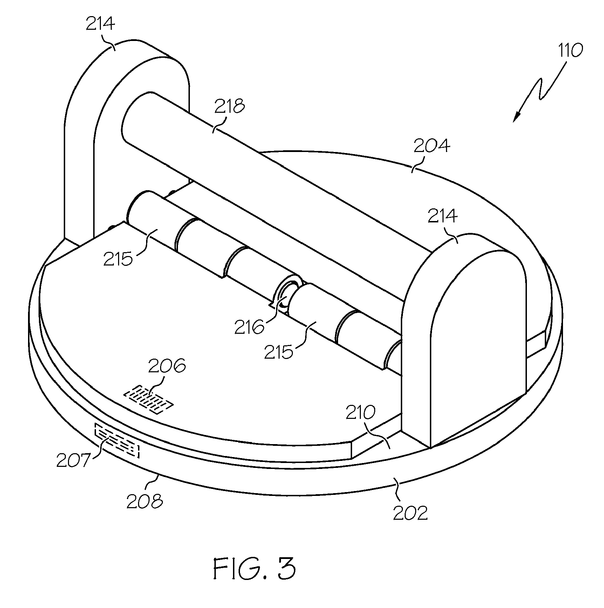

Turning first to FIGs. 2 and 3, plan views of a first embodiment of the pressure relief check valve 110 are depicted from the downstream side, in an open position (FIG. 2) and a closed position (FIG. 3). The pressure relief check valve 110 includes a valve body 202, a pair of flappers 204, a pair of magnets 206, and a pair of adjustment mechanisms 207. The valve body 202 is preferably annular in shape and includes an upstream side 208, a downstream side 210, and a pair of flow channels 212 that extend between the upstream and downstream sides 208, 210. The valve body 202 also includes a pair of support flanges 214 that extend axially from the valve body downstream side 210. A plurality of hinge pins 216 (only one is visible in FIGs. 2 and 3) are disposed in, and a stop tube 218 is coupled to, and extends between, the support flanges 214.

The flappers 204 are each rotationally mounted on the valve body 202, and are movable between a closed position and a full-open position. In the depicted embodiment this is accomplished be rotationally mounting each flapper 204 onto the hinge pins 216 via integral lugs 215. No matter the specific manner in which the flappers 204 are rotationally mounted, in the closed position, the flappers 204 engage a seat region 219 on the valve body 202 to seal, or at least substantially seal, a corresponding flow channel 212. In the full-open position, or any one of numerous open positions between the closed and full-open positions, the flappers 204 unseal the corresponding flow channels 212. Thus, when the flappers 204 are in the closed position, fluid flow through the flow channels 212 is prevented, or at least substantially inhibited, and when the flappers 204 are in an open position, fluid flow through the flow channels 212 is allowed. Rotational movement of the flappers 204 is limited by the stop tube 218.

The pressure relief check valve 110 is preferably configured such that both flappers 204 are simultaneously in either the closed or an open position. However, as will also be described further below, this is merely exemplary of a particular embodiment, and the pressure relief check valve 110 could be configured such that each flapper 204 may be individually moved to an open or closed position. Moreover, although the pressure relief check valve 110 is preferably implemented with a pair of flow channels 212 and an associated pair of flappers 204, it will be appreciated that the pressure relief check valve 110 could, in an alternative embodiment, be implemented with more or less than this number of flow channels 212 and/or flappers 204.

Each of the magnets 206, at least in the depicted embodiment, is coupled to a corresponding flapper 204. The magnets 206 are preferably permanent magnets such as rare earth magnets, although different types of magnets may be used. Each magnet 206 may be coupled to its corresponding flapper 204 using any one of numerous techniques, and in any one of numerous locations on, or within, its corresponding flapper 204. The manner in which each magnet 206 may be coupled to its corresponding flapper 204 is discussed further below. Preferably, however, the magnet 206 is disposed at a location coincident with the section of the flapper 204 that engages the valve body seat region 219 when the flappers 204 are in the closed position.

Each of the adjustment mechanisms 207 is made from a magnetically permeable material, such as a magnetic steel. Each adjustment mechanism 207 is coupled to the valve body 202 at a position that preferably corresponds with one of the magnets 206. Thus, each adjustment mechanism 207 is magnetically attracted to one of the magnets 206 with a magnetic closing force at least when the corresponding flapper 204 is in the closed position, to thereby prevent, or at least substantially inhibit, movement of the flappers 204 from the closed position. Preferably, each flapper 204 is configured to receive a variable inlet pressure from a non-illustrated inlet pressure source in a direction opposite the direction of the magnetic closing force, thereby moving the flapper 204 to the open position when the variable inlet pressure exceeds the magnetic closing force. When the flapper 204 begins moving to the open position in this manner, the magnetic closing force is rapidly reduced, thereby allowing opening of the flapper 204 to the full-open position with enhanced precision and reduced pressure loss.

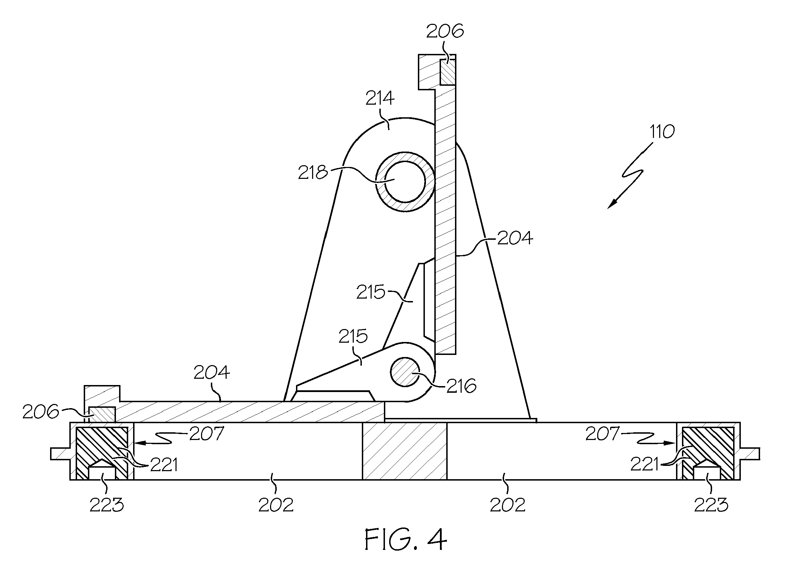

As shown in FIGs. 4-6, each magnet 206 is disposed at least partially within the flappers 204. However, it will be appreciated that in other embodiments one or more magnets 206 may be placed on top of or adjacent to each flapper 204, may be integrally formed with each flapper 204, or may be coupled to each flapper 204 in any one of a number of different ways. Moreover, in other embodiments each flapper 204 may itself be formed of, or at least partially formed of, a magnetized material. Regardless of the particular implementation, each flapper 204 preferably includes a seat engagement region 222 that contacts the seat region 219 when the flapper 204 is in the closed position. The magnet 206 is preferably recessed from the seat engagement region 222 by a distance that defines a gap 224. As a result, the magnet 206 does not come into contact with the seat region 219 when the flapper 204 is in the closed position, further enhancing the durability of the magnet 206. The distance that the magnet 206 is recessed from the seat engagement region 219 may vary.

Also as shown in FIGs. 4-6, in a preferred embodiment the adjustment mechanism 207 is an adjustable screw that includes a plurality of threads 221 on its outer surface. These threads 221 mate with like threads formed in the valve body 202. It will be appreciated that the adjustment mechanism 207 can take any one of a number of different forms. In the depicted embodiment, the adjustable screw 207 includes a hex portion 223 that facilitates insertion of a suitable tool. Moving the adjustment mechanism 207 varies the distance 226 between the adjustment mechanism 207 and the magnet 206 when the flapper 204 is in the closed position and concomitantly varies the magnetic closing force.
Accordingly, the opening pressure of the valve 110 can be adjusted by moving the adjustment mechanism 207.

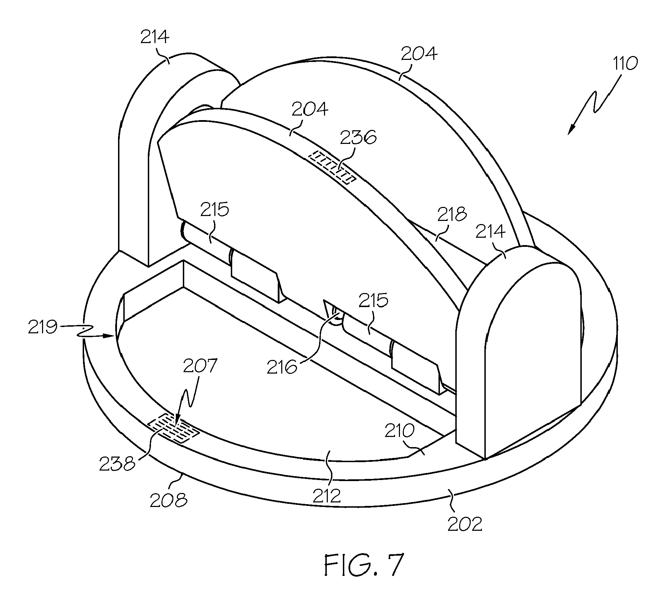

Turning now to FIG. 7, a plan view is depicted of an alternative, second, embodiment of the valve 110. This second embodiment is preferably identical to the first embodiment, except that the flappers 204 each include a magnetic portion 236 instead of a magnet 206, and the adjustment mechanisms 207 each include an adjustable magnet 238. The magnetic portion 236 of each flapper 204 is preferably made of a magnetically permeable material, such as a magnetic steel. The adjustable magnet 238 of each adjustment mechanism 207 is preferably a permanent magnet such as a rare earth magnet, although different types of magnets may be used. Collectively, the magnetic portion 236 of each flapper 204 and the adjustable magnet 238 of each adjustment mechanism 207 perform the roles of the adjustment mechanisms 207 and the magnets 204 as described in the first embodiment above.

In the second embodiment depicted in FIG. 7, each adjustment mechanism 207 is preferably coupled to the valve body 202 at a position such that the adjustable magnet 238 of each adjustment mechanism 207 corresponds with the magnetic portion 236 of one of the flappers 204. Thus, the adjustable magnet 238 of each adjustment mechanism 207 magnetically attracts a magnetic portion 236 of a corresponding flapper 204 with a magnetic closing force at least when the corresponding flapper 204 is in the closed position, to thereby prevent, or at least substantially inhibit, movement of the flappers 204 from the closed position. As with the first embodiment, preferably each flapper 204 is configured to receive a variable inlet pressure from a non-illustrated inlet pressure source in a direction opposite the direction of the magnetic closing force, thereby moving the flapper 204 to the open position when the variable inlet pressure exceeds the magnetic closing force. When the flapper 204 begins moving to the open position in this manner, the magnetic closing force is rapidly reduced, thereby allowing opening of the flapper 204 to the full-open position with enhanced precision and reduced pressure loss.

Moving the adjustment mechanism 207, or the adjustable magnet 238 thereof, varies the distance 226 between the adjustable magnetic 238 and the magnetic portion 236 when the flapper 204 is in the closed position and concomitantly varies the magnetic closing force. Accordingly, the opening pressure of the valve 110 can be adjusted by moving the adjustment mechanism 207 or the adjustable magnet 238 thereof. As mentioned above, the valve 110 in this second embodiment otherwise operates in a similar fashion as the first embodiment discussed above.

The pressure relief check valve 110 provides a number of potential benefits. For example, the use of magnets 206 and corresponding adjustment mechanisms 207 (or the use of magnetic portions 236 and corresponding adjustable magnets 237) allows for calibration of the opening pressure and operation of the pressure relief check valve 110 with improved precision, opening of the flappers 204 to the full-open position on a more consistent basis, reducing space, weight, cost, and/or reliance on moving parts, increasing reliability and/or durability, and/or minimizing pressure loss.

It will be appreciated that the pressure relief check valve 110, and/or various components thereof, may also include any one or more of a number of different variations from the exemplary embodiments depicted above. It will similarly be appreciated that the pressure relief check valve 110 can be used in any one of numerous different types of systems 100.

While the invention has been described with reference to a preferred embodiment, it will be understood by those skilled in the art that various changes may be made and equivalents may be substituted for elements thereof without departing from the scope of the invention. In addition, many modifications may be made to adapt to a particular situation or material to the teachings of the invention without departing from the essential scope thereof. Therefore, it is intended that the invention not be limited to the particular embodiment disclosed as the best mode contemplated for carrying out this invention, but that the invention will include all embodiments falling within the scope of the appended claims.

## Claims

1. An adjustable pressure relief check valve (110) comprising:
a valve body (202) having an upstream side (208), a downstream side (210), and a flow channel (212) that extends between the upstream and downstream sides (208, 210);
a flapper (204) rotationally mounted on the valve body (202) and movable between a closed position, in which the flapper (204) at least substantially seals the flow channel (212), and an open position, in which the flapper (204) unseals the flow channel (212);
a magnet (206) coupled to the flapper (204); and
an adjustment mechanism (207) comprising a magnetically permeable material, the adjustment mechanism (207) movably coupled to the valve body (202) at a position in which the adjustment mechanism (207) is magnetically attracted to the magnet (206) with a magnetic closing force at least when the flapper (204) is in the closed position, to thereby at least substantially inhibit flapper (204) movement from the closed position;
wherein movement of the adjustment mechanism (207) varies the magnetic closing force.

2. The adjustable pressure relief check valve (110) of Claim 1, wherein the magnet (206) is disposed at least partially within the flapper (204).

3. The adjustable pressure relief check valve (110) of Claim 1, wherein:
the valve body (202) includes a seat region (219);
the flapper (204) includes a seat engagement region (222) that contacts the seat region (219) when the flapper (204) is in the closed position; and
the magnet (206) is separated from the seat engagement region (222) by a gap (224), whereby the magnet (206) does not contact the seat region (219) when the flapper (204) is in the closed position.

4. The adjustable pressure relief check valve (110) of Claim 1, wherein the adjustment mechanism (207) is movable between a plurality of positions, each position representing a different distance (226) from the magnet (206), and therefore a different magnetic closing force, when the flapper (204) is in the closed position.

5. The adjustable pressure relief check valve (110) of Claim 4, wherein the adjustment mechanism (207) includes a plurality of threads (221).

6. The adjustable pressure relief check valve (110) of Claim 4, wherein the adjustment mechanism (207) comprises an adjustable screw (207).

7. The adjustable pressure relief check valve (110) of Claim 1, further comprising:
a second flow channel (212) that extends between the upstream and downstream sides (208, 210);
a second flapper (204) rotationally mounted on the valve body (202) and movable between a closed position, in which the second flapper (204) at least substantially seals the second flow channel (212), and an open position, in which the second flapper (204) unseals the second flow channel (212);
a second magnet (206) coupled to the second flapper (204); and
a second adjustment mechanism (207) comprising a magnetically permeable material, the second adjustment mechanism (207) movably coupled to the valve body (202) at a position in which the second adjustment mechanism (207) is magnetically attracted to the second magnet (206) with a second magnetic closing force at least when the second flapper (204) is in the closed position, to thereby at least substantially inhibit movement of the second flapper (204) from the closed position;
wherein movement of the second adjustment mechanism (207) varies the second magnetic closing force.

8. An adjustable pressure relief check valve (110) comprising:
a valve body (202) having an upstream side (208), a downstream side (210), and a flow channel (212) that extends between the upstream and downstream sides (208, 210);
a flapper (204) rotationally mounted on the valve body (202) and movable between a closed position, in which the flapper (204) at least substantially seals the flow channel (212), and an open position, in which the flapper (204) at least substantially unseals the flow channel (212), the flapper (204) comprising a magnetically permeable material; and
an adjustable magnet (238) movably coupled to the valve body (202) at a position in which the adjustable magnet (238) magnetically attracts the magnetically permeable material with a magnetic closing force at least when the flapper (204) is in the closed position, to thereby at least substantially inhibit flapper (204) movement from the closed position;
wherein movement of the adjustable magnet (238) varies the magnetic closing force.

9. The adjustable pressure relief check valve (110) of Claim 8, wherein the adjustable magnet (238) is movable between a plurality of positions, each position representing a different distance (226) from the magnetically permeable material, and therefore a different magnetic closing force, when the flapper (204) is in the closed position.

10. An adjustable pressure relief check valve (110) comprising:
a valve body (202) having an upstream side (208), a downstream side (210), and a flow channel (212) that extends between the upstream and downstream sides (208, 210);
a flapper (204) rotationally mounted on the valve body (202) and movable between a closed position, in which the flapper (204) at least substantially seals the flow channel (212), and an open position, in which the flapper (204) unseals the flow channel (212), the flapper (204) including a magnet (206); and
an adjustment mechanism (207) comprising a magnetically permeable material, the adjustment mechanism (207) movably coupled to the valve body (202) at a position in which the adjustment mechanism (207) is magnetically attracted to the magnet (206) with a magnetic closing force at least when the flapper (204) is in the closed position, to thereby at least substantially inhibit flapper (204) movement from the closed position;
wherein movement of the adjustment mechanism (207) varies the magnetic closing force.
